# EUROPÄISCHE PATENTSCHRIFT

(11) **EP 2 787 466 B1**
(45) Veröffentlichungstag und Bekanntmachung des Hinweises auf die Patenterteilung: **30.06.2021**
(21) Anmeldenummer: 14161467.7
(22) Anmeldetag: 25.03.2014
(51) Int. Cl.: G06F 21/85

(54) **Nachrichtenübertragung in Haushaltsgerät**
Message transmission in household appliance
Transmission d'informations dans un appareil ménager

(30) Priorität: 02.04.2013 DE 102013205754
(43) Veröffentlichungstag der Anmeldung: 08.10.2014
(73) Patentinhaber: BSH Hausgeräte GmbH, 81739 München (DE)
(72) Erfinder: Doric, Igor, 83301 Traunreut (DE); Koch, Bernhard, 83334 Inzell (DE); Schönhuber, Josef, 83365 Nussdorf (DE)

(56) Entgegenhaltungen:
- EP-A2- 0 814 392
- EP-A2- 1 054 309
- DE-A1-102009 026 752
- US-A1- 2009 316 905
- US-A1- 2013 077 641

## Beschreibung

Die Erfindung betrifft ein Verfahren zur Übertragung von Nachrichten in einem Haushaltsgerät sowie ein entsprechendes Haushaltsgerät.

Einzelne Elektronikmodule eines Haushaltsgeräts sind über ein Bussystem miteinander vernetzt. Ein solches Elektronikmodul kann z.B. umfassen: ein Regelmodul, eine Benutzerschnittstelle (Userinterface), Tasten und/oder Drehwähler, ein Bratenthermometer und ein Zeitmodul.

Das verwendete Bussystem kann z.B. einen D-Bus oder einen D-Bus-2 umfassen, z.B. in Form eines universellen Bussystem, basierend auf UART (Universal Asynchronous Receiver Transmitter), um mehrere Busteilnehmer (z.B. ein Regelmodul o.ä.) innerhalb und außerhalb eines Haushaltsgeräts zu verbinden.

Das Bus-System schafft eine definierte Schnittstelle zu Lieferanten und einzelnen Komponenten des Haushaltsgeräts, z.B. eines Backofens. Die Bus-Teilnehmer kommunizieren über Telegramme miteinander, die Telegramme selbst sind in einer Bus-Spezifikation definiert. Ein Telegramm umfasst z.B. einen Empfänger, eine Telegrammbezeichnung und einem Datenteil.

Beispielsweise kann ein Sender "Regelmodul" an einen Empfänger "Userinterface" ein Telegramm "Türstatus" mit den Daten bzw. Werten "offen" oder "geschlossen" senden. Das Userinterface wiederum unterbricht den laufenden Backofenbetrieb, indem es ein Telegramm an das Regelmodul schickt. Als weiteres Beispiel kann das Bratenthermometermodul ein Telegramm "Aktuelle Bratenthermometertemperatur" mit dem Wert "78°C" an den Empfänger "Userinterface" übermitteln.

Um die produktübergreifende Verwendung einzelner Elektronikmodule zu gewährleisten sind die definierten Telegramme z.B. für mehrere Marken und/oder mehrere Gerättypen oder Geräteausführungen (z.B. Backofen, Dampfgarer, Mikrowellenkombigerät, etc.) einer Produktserie gleich spezifiziert. Mittels der Telegramme werden auch sensible Daten, beispielsweise die konkrete Heizkörperansteuerung bei Automatikprogrammen, übertragen. Ein Automatikprogramm umfasst z.B. mehrere aufeinander folgende Heizarten, z.B. Ober-/Unterhitze, Heißluft, Mikrowelle, Dampf, etc. Die Einstellungen, in Abhängigkeit von der gewählten Speisekategorie und dem eingestellten Gewicht der Speise, werden durch die Anwendungstechnik in zeitaufwendigen Auswertungen empirisch ermittelt.

Es besteht die technische Möglichkeit einer Ankopplung an das Bus-System über standardisierte und frei verkäufliche Hard- und Software (CAN-Bus-Adapter); auf diese Weise kann der Telegrammverkehr aufgezeichnet werden. Durch einfaches Bedienen des Haushaltsgeräts und Überwachen der Telegramme können einzelne Telegramme den Aktionen eindeutig zugeordnet werden und in Folge dessen auch aufwändig erstellte Automatikprogramme ausgelesen werden.

Dies wird nachfolgend anhand eines Beispiels erläutert: Öffnet der Benutzer die Backofentür eines Herdes erkennt er auf dem Bus ein Telegramm A mit dem Wert 1. Daraufhin schließt der Benutzer die Backofentür und sieht auf dem Bus das Telegramm A mit dem Wert 0. Somit kann der Benutzer das Telegramm A eindeutig dem Türstatus zuordnen. Entsprechend kann der Benutzer nach dem Auswählen und Starten von Heizarten einzelne Heizartentelegramme mitlesen und eindeutig den entsprechenden Heizarten zuordnen.

Beim Ablauf von Automatikprogrammen werden in vorgegebener Reihenfolge und Dauer dieselben Heizartentelegramme verwendet. Automatikprogramme können hierbei auf dem Bus mitgelesen und automatisiert ausgewertet werden. Auch andere Elektronikmodule im System (z.B. Sensorikmodule) können ihre Messdaten über den Bus transparent mitteilen.

Hierbei ist es von Nachteil, dass die Telegramme für eine Vielzahl von Geräten bzw. Gerätetypen ggf. auch unterschiedlicher Marken eines Herstellers gleich sind und von einem Wettbewerber mit einfachen Mitteln analysiert werden können. Dies ist insbesondere von Nachteil für aufwändig erstellte Automatikprogramme, die eine bestimmte Abfolge von Telegrammen, ggf. in Abhängigkeit von Sensoren (bzw. weiteren Telegrammen), umfassen und eine besonders vorteilhafte automatisierte Zubereitung von unterschiedlichen Speisen ermöglichen. Ein Wettbewerber kann somit mit überschaubarem Aufwand diese Automatikprogramme rekonstruieren.

US 2009/0316905 A1 offenbart ein Verfahren, ein System und eine Vorrichtung zum Schlüsselaustausch durch eine Verschlüsselungsmethode sowie ein System. In einer Ausführungsform umfasst das Verfahren das Erzeugen eines Sicherheitsschlüssels, der einem geschützten Medieninhalt zugeordnet ist, das Zerlegen des Sicherheitsschlüssels (der z. B. ein unverschlüsselter Schlüssel sein kann) in einen Satz von Schlüsselbits, das Erzeugen von Nichtschlüsselbits (die z.B. willkürlich oder zufällig erzeugte Binärzahlen sein können), wobei die Nichtschlüsselbits zwischen mindestens einem Teil des Satzes von Schlüsselbits basierend auf einem Algorithmus eines Steuerregistermoduls eines Streumoduls positioniert werden, wobei eine Zahl des Satzes von Schlüsselbits und Nichtschlüsselbits in einem Paket algorithmisch spezifiziert wird, und Übermitteln des Pakets und anderer Pakete, wobei jedes die Nichtschlüsselbits aufweist, die zwischen mindestens einem Teil des Satzes von Schlüsselbits jedes Pakets und der anderen Pakete an ein Sammelmodul verteilt werden.

EP 1 054 309 A2 offenbart ein Verfahren zur sicheren Übertragung von Datensignalen über ein Bussystem, wobei die Datensignale von zumindest einem Sensor erzeugt und über das Bussystem zu mindestens einem Aktor übertragen werden. Die von zumindest einem der Sensoren erzeugten Datensignale werden vor Einleitung in das Bussystem gemäß einem vorgegebenen Sicherheitskodierverfahren kodiert. Anschließend werden die kodierten Datensignale in das Bussystem eingespeist und über dieses übertragen. Die kodierten Datensignale werden von zumindest einem der Aktoren empfangen und gemäß einem dem vorgegebenen Sicherheitskodierverfahren entsprechenden Dekodierverfahren dekodiert. Weiterhin ist ein elektronisches Überwachungssystem zum Durchführen dieses Verfahrens beschrieben.

DE 10 2009 026 752 A1 offenbart ein Haushaltsgerät mit einer Steuereinheit und einer Datenaustauscheinheit, welche zum Datenaustausch mit der Steuereinheit und mit einer zum Haushaltsgerät externen Kommunikationsstelle ausgebildet ist, wobei das Haushaltsgerät eine Standard-Schnittstelle aufweist, über welche der Datenaustausch mit der externen Kommunikationsstelle durchführbar ist. DE 10 2009 026 752 A1 betrifft auch ein System mit mehreren derartigen Haushaltsgeräten, wobei eine Datenaustauscheinheit für mehrere Haushaltsgeräte verwendbar ist.

US 2013/0077641 A1 offenbart eine Schaltung, die einen Eingangsanschluss zum Empfangen eines Eingangssignals und eine Zeitstempelschaltung mit einem Eingang und einem Ausgang enthält. Der Eingang ist mit dem Eingangsanschluss verbunden. Die Zeitstempelschaltung enthält einen Zeitgeber, und der Ausgang dient zum Bereitstellen eines Zeitstempels basierend auf einem Wert des Zeitgebers als Reaktion auf den Empfang des Eingangssignals. Die Schaltung enthält ferner einen Kodierer, der einen Eingang enthält, der mit dem Ausgang der Zeitstempelschaltung gekoppelt und konfiguriert ist, um den Zeitstempel in ein Paket zu kodieren. Die Schaltung enthält auch einen Sender, der zum Senden des Pakets konfiguriert ist.

EP 0 814 392 A2 offenbart eine Steuer- bzw. Regelvorrichtung, insbesondere für einen Elektroherd und einen Elektrobackofen. Zur Minderung des elektronischen Steuer- bzw. Regelaufwandes sind mehrere, nur zeitweise zu aktivierende Slave-Module wechselweise an einen jeweils einzigen gemeinsamen Ein- bzw. Ausgang eines mit entsprechend geringerem Bauteile-Aufwand auszurüstenden Mastermoduls anschließbar.

Die **Aufgabe** der Erfindung besteht darin, die vorstehend genannten Nachteile zu vermeiden und insbesondere eine effiziente Lösung zur Absicherung der in den Telegrammen übertragenen Informationen zu schaffen.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Übertragung von Nachrichten zwischen einem ersten Elektronikmodul und einem zweiten Elektronikmodul eines Haushaltsgeräts angegeben,
- bei dem ein von dem ersten Elektronikmodul zu übermittelndes Telegramm mittels einer vorgegebenen Information und mittels einer veränderlichen Zeitinformation verschlüsselt wird,
- bei dem die verschlüsselte Nachricht in Form eines Telegramms über ein Bus-System an das zweite Elektronikmodul übertragen wird und von dem zweiten Elektronikmodul mittels der vorgegebenen Information und der veränderlichen Zeitinformation entschlüsselt wird,
- wobei die Elektronikmodule mindestens eine Benutzerschnittstelle, eine Messeinheit, eine Schalteinheit und/oder einen Aktuator umfassen, welche verschlüsselte Telegramme zum Nachrichtenaustausch nutzen.

Somit ist sichergestellt, dass die Nachrichten (Telegramme), die zwischen Elektronikmodulen des Haushaltsgeräts auf einem Bus-System übertragen werden, zumindest häufig bzw. immer unterschiedliche Inhalte aufweisen, auch wenn die gleiche Information übertragen wird. Damit kann anhand des übertragenen Pakets ohne die vorgegebene Aktion nicht auf den Inhalt rückgeschlossen werden.

Das Haushaltsgerät ist ein Haushaltsgroßgerät (z.B. ein Gargerät, ein Wäschebehandlungsgerät, ein Kältegerät, usw.) oder ein Haushaltskleingerät (z.B. ein Toaster, eine Kaffeemaschine, usw.). Das Gargerät kann insbesondere ein Backofen, ein Dampfgargerät, ein Mikrowellengerät oder eine Kombination daraus, bspw. ein Backofen-/Mikrowellen-Kombinationsgerät, sein.

Eine Weiterbildung ist es, dass die vorgegebene Information einen Schlüssel umfasst.

Bei dem Schlüssel kann es sich um eine Information oder um ein Geheimnis handeln, das (nur) den kommunizierenden Elektronikmodulen bekannt ist. Ohne Kenntnis des Geheimnisses kann durch Mithören auf dem Kommunikationskanal (z.B. Bus-System) nicht auf die Inhalte Nachrichten rückgeschlossen werden.

Insbesondere können symmetrische oder asymmetrische kryptographische Verfahren im Zusammenhang mit der vorgestellten Lösung eingesetzt werden.

Eine andere Weiterbildung ist es, dass die vorgegebene Information ein Geheimnis umfasst betreffend eine Schlüsselinformation.

Auch ist es möglich, dass die vorgegebene Information die Schlüsselinformation betrifft, diese aber ggf. nicht selbst enthält. Beispielsweise kann das Geheimnis dadurch bestimmt sein, dass es angibt, wo eine Information für die Verschlüsselung in die Nachricht eingefügt wird bzw. wo sie der Nachricht zur Entschlüsselung entnommen werden muss.

Auch kann das Geheimnis einen Hinweis enthalten dahingehend, wie die Nachricht zu verschlüsseln bzw. zu entschlüsseln ist. Vorzugsweise ist das Geheimnis den kommunizierenden Elektronikmodulen bekannt. Insbesondere kann die übertragende Einheit bzw. die empfangende Einheit des jeweiligen Elektronikmoduls die Verschlüsselung bzw. Entschlüsselung als einen transparenten Dienst bereitstellen, so dass bestehende Komponenten auch ohne große Anpassung weiterhin genutzt werden können.

Insbesondere ist es eine Weiterbildung, dass das Geheimnis eine Verteilung der Schlüsselinformation in der Nachricht ist.

Auch ist es eine Weiterbildung, dass das Geheimnis die Positionen der verteilten Schlüsselinformation in der Nachricht ist.

Insbesondere kann das Geheimnis, z.B. Bits und/oder Bytes eines Schlüssels, in der Nachricht verteilt gespeichert werden. Weiß der Dekoder, wo die einzelnen Bits und/oder Bytes des Schlüssels in der Nachricht stehen, kann er den Schlüssel entsprechend zusammensetzen und die (verbleibende) Nachricht entschlüsseln.

Ferner ist es eine Weiterbildung, dass das Elektronikmodul zusätzlich mindestens eines der folgenden Module umfasst:
- ein Steuer- oder Regelmodul,
- ein Zeitmodul,
- ein Bratenthermometer.

Bei dem Elektronikmodul kann es sich grundsätzlich um jede Komponente des Haushaltsgeräts handeln, die mit dem Bus koppelbar ist oder sein könnte.

Im Rahmen einer zusätzlichen Weiterbildung wird die zu übermittelnde Nachricht von einem Sender verschlüsselt, zu einem Empfänger übertragen und von dem Empfänger entschlüsselt.

Eine nächste Weiterbildung besteht darin, dass die Nachricht über einen D-Bus oder einen D-Bus-2 übertragen wird.

Durch die veränderliche Zeitinformation kann sichergestellt werden, dass durch Verschlüsselung kodierte Nachrichten, die den gleichen Inhalt haben, unterschiedlich aussehen, d.h. auf dem Bus-System in Form unterschiedlich aussehender Telegramme übertragen werden.

Eine nächste Ausgestaltung ist es, dass das Haushaltsgerät dazu eingerichtet ist, die Nachricht zusätzlich mittels einer veränderlichen Datumsinformation zu verschlüsseln..

Auch ist es eine Ausgestaltung, dass die zu übermittelnde Nachricht verschlüsselt wird, indem ein Schlüssel in Teile zerlegt wird und die Teile des Schlüssels an unterschiedlichen Positionen der Nachricht eingefügt werden, wobei die vorgegebene Information angibt, an welchen Positionen der Nachricht welche Teile des Schlüssels eingefügt werden bzw. wurden.

Die vorstehend genannte Aufgabe wird auch gelöst durch ein Haushaltsgerät
- wobei das Haushaltsgerät ein Haushaltsgroßgerät oder ein Haushaltskleingerät ist,
- ein erstes Elektronikmodul und ein zweites Elektronikmodul aufweist,
- mit einem Bus-System ausgestattet ist, anhand dessen das erste Elektronikmodul und das zweite Elektronikmodul verbunden sind,
- wobei von dem ersten Elektronikmodul eine zu übermittelnde Nachricht an das zweite Elektronikmodul über das Bus-System übertragbar ist,
wobei das Haushaltsgerät dazu eingerichtet ist,
- eine von dem ersten Elektronikmodul zu übermittelnde Nachricht in Form eines Telegramms mittels einer vorgegebenen Information und einer veränderlichen Zeitinformation zu verschlüsseln,
- die verschlüsselte Nachricht in Form eines Telegramms zu übertragen und
- das von dem zweiten Elektronikmodul empfangene verschlüsselte Telegramm mittels der vorgegebenen Information und der veränderlichen Zeitinformation zu entschlüsseln,
- wobei die Elektronikmodule mindestens eine Benutzerschnittstelle, eine Messeinheit, eine Schalteinheit und/oder einen Aktuator umfassen, welche verschlüsselte Telegramme zum Nachrichtenaustausch nutzen.

Eine Weiterbildung besteht darin, dass die vorgegebene Information ein Geheimnis ist, das in dem ersten Elektronikmodul und in dem zweiten Elektronikmodul gespeichert ist.

Ausführungsbeispiele der Erfindung werden nachfolgend anhand der Zeichnungen dargestellt und erläutert.

Es zeigen:
- Fig.1: ein Diagramm zur Visualisierung eines Szenarios mit einem Sender, einem Bus und einem Empfänger, wobei der Sender ein Telegramm A1 für eine Aktion zu einem Zeitpunkt t1 und zu einem Zeitpunkt t2 übermittelt und die beiden übermittelten Telegramme nicht identisch sind;
- Fig.2: ein symbolisches Schaubild zur Veranschaulichung einer möglichen Erzeugung von Telegrammen, wobei ein Telegramm von dem Sender in ein anderes Telegramm umkodiert wird;
- Fig.3: beispielhaft eine Möglichkeit der Verschachtelung von Schlüsselinformationen innerhalb des Felds eines Telegramms.

Es wird ein Ansatz vorgeschlagen, der eine Zuordnung von Telegrammen zu Funktionen des Haushaltsgeräts erschwert oder unmöglich macht. Insbesondere soll verhindert werden, dass ein Mitlesen von Telegrammen auf einem Bussystem, das Elektronikmodule des Haushaltsgeräts zur Kommunikation (zum Nachrichtenaustausch) nutzt, einen einfachen Rückschluss auf die Funktionsweise bzw. die Abfolge von Einstellungen oder Aktionen des Haushaltsgeräts ermöglicht.

Diesbezüglich wird vorgeschlagen, dass verschlüsselte Telegramme generiert werden, die auch bei gleichen Aktionen (z.B. Starten einer Heizart, Einstecken eines Sensors, Schließen einer Backofentür, etc.) zumindest teilweise (insbesondere immer) unterschiedliche Bus-Signale verursachen. Vorteilhaft bleibt die Bus-Hardware von diesem Ansatz unberührt, so dass unverändert die Hardware-Komponenten des Bus-Systems verwendet werden können. Bei dem Bus-System kann es sich z.B. um einen D-Bus oder einen D-Bus-2 handeln, der einzelne Elektronikmodule des Haushaltsgeräts koppelt. Bei dem Elektronikmodul handelt es sich um eine Komponente des Haushaltsgeräts, die mit dem Bus koppelbar ist oder sein könnte. Die Elektronikmodule umfassen mindestens eine Benutzerschnittstelle, eine Messeinheit, eine Schalteinheit und/oder einen Aktuator, welche verschlüsselte Telegramme zum Nachrichtenaustausch nutzen. Das Elektronikmodul kann insbesondere mindestens einen Sensor und/oder mindestens einen Aktuator umfassen.

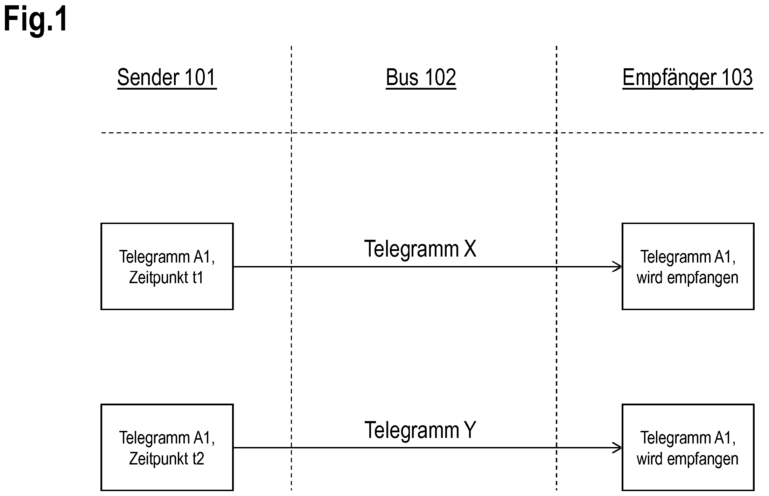

**Fig.1** zeigt ein Diagramm zur Visualisierung eines Szenarios mit einem Sender 101, einem Bus 102 und einem Empfänger 103. Der Sender 101 spezifiziert ein Telegramm A1 für eine Aktion, das zu einem Zeitpunkt t1 übermittelt wird. Hieraus erstellt der Sender 101 durch Verschlüsselung ein Telegramm X, das er über den Bus 102 an den Empfänger 103 übermittelt. Der Empfänger 103 entschlüsselt aus dem empfangenen Telegramm X das Telegramm A1.

Zu einem Zeitpunkt t2 möchte der Sender 101 erneut das Telegramm A1 übertragen; es wird hierfür durch Verschlüsselung ein Telegramm Y erstellt und über den Bus 102 zu dem Empfänger 103 übermittelt. Der Empfänger 103 ist in der Lange, aus dem empfangenen Telegramm Y das Telegramm A1 zu entschlüsseln.

Auf dem Bus 102 sind die Telegramme X und Y jeweils lesbar. Sie sind aber nicht identisch und lassen ohne gesonderte Entschlüsselung nicht auf die doppelte Versendung des Telegramms A1 rückschließen.

Beispiel: Der Benutzer wählt eine Heizart aus der Heizartenauswahl und startet diese. Auf dem Bus liest er das Telegramm X mit. Anschließend startet der Benutzer ein Automatikprogramm und sieht das Telegramm Y. Obwohl das Automatikprogramm hier dieselbe Heizart wie zuvor verwendet, ist ein solcher Rückschluss aufgrund der unterschiedlichen Telegramme X und Y nicht mehr möglich. So ist die gleiche Information, verschickt zu unterschiedlichen Zeitpunkten über den Bus, für einen Beobachter der Telegramme auf dem Bus unterschiedlich.

Beispielsweise werden die über den Bus 102 zu übermittelnden Telegramme in Abhängigkeit vom Zeitpunkt des Versendens (oder einem anderen variierenden Zeitpunkt) verschlüsselt. Damit kann gewährleistet werden, dass Telegramme, die gleiche Inhalte transportieren, unterschiedlich aussehen.

Insbesondere kann das Telegramm nach dem Befehl zum Versenden über den Bus mittels eines Algorithmus verschlüsselt werden. Dem Telegramm kann ein von dem Sendezeitpunkt t abhängiger Schlüssel hinzugefügt werden. Die Position oder die mehreren Positionen des Schlüssels in dem Telegramm sind dem Entschlüsselungsalgorithmus beim Empfänger bekannt. Nach Empfang kann somit das Telegramm entschlüsselt und weiterverarbeitet werden.

Hierbei ist vorteilhaft sichergestellt, dass durch Mithören auf dem Übertragungsweg nicht länger anhand gleicher Telegramme auf gleiche Aktionen rückgeschlossen werden kann.

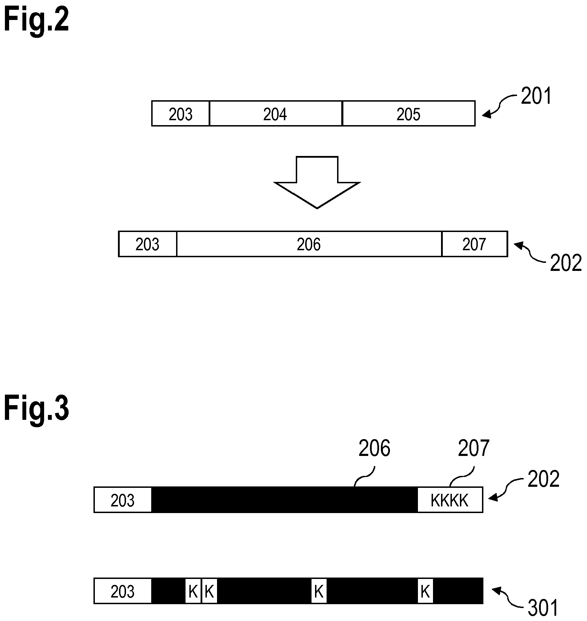

**Fig.2** zeigt ein symbolisches Schaubild zur Veranschaulichung einer möglichen Erzeugung von Telegrammen, wobei ein Telegramm 201 von dem Sender in ein Telegramm 202 verschlüsselt wird.

Das Telegramm 201 umfasst eine Busadresse 203 des Empfängers, eine Telegrammbezeichnung (z.B. eine Telegrammnummer) 204 sowie Daten 205 (z.B. "1" für Türe offen und "0" für Türe geschlossen).

Das verschlüsselte und über den Bus zu übertragende Telegramm 202 umfasst die Busadresse 203 des Empfängers, ein Feld 206 mit der verschlüsselten Telegrammbezeichnung 204 und den verschlüsselten Daten 205 sowie einen Schlüssel 207.

Fig.2 zeigt hierbei nur symbolisch die Position des Schlüssels 207 innerhalb des Telegramms 202. Beispielsweise ist der Schlüssel 207 auf beliebige Positionen innerhalb des Telegramms 202 verteilt (verschachtelt). Zum Beispiel können Bits und/oder Bytes des Schlüssels 207 an bestimmten vorgegebenen Positionen des Telegramms 202 angeordnet sein. Die Positionen kennt der Entschlüsselungsalgorithmus im Empfänger und kann somit das Telegramm 201 rekonstruieren.

**Fig.3** zeigt beispielhaft eine Möglichkeit der Verschachtelung von Schlüsselinformationen K innerhalb des Felds 206 in Form eines Telegramms 301.

Insbesondere kann der Schlüssel 207 variiert werden. Zum Beispiel können zu verschiedenen Zeitpunkten oder für verschiedene Informationen unterschiedliche Schlüssel verwendet werden. Auch ist es eine Möglichkeit, dass die Position bzw. die Positionen des Schlüssels 207 innerhalb des Telegramms 202 variiert werden. Ein Muster für eine solche Variation kann z.B. dem Entschlüsselungsalgorithmus bekannt sein. Auch kann ein Verweis auf ein solches Muster, z.B. an einer festen Position in dem Telegramm 202, dem Entschlüsselungsalgorithmus mitgeteilt werden.

Der hier vorgeschlagene Ansatz ist kostengünstig zu realisieren. Die Umsetzung kann ohne Änderung der Telegrammspezifikationen erfolgen; vorzugsweise wird die Kommunikationsschicht des Bus-Systems angepasst, die transparent den hier beschriebenen Dienst erbringt, gleiche Informationen auf dem Bus unterschiedlich aussehen zu lassen. Die Lösung hat weiterhin den Vorteil, dass sensible Daten geschützt über den Bus übertragen werden können. Gleichzeitig kann der effiziente Ansatz, gleiche Telegramme für unterschiedliche Geräte, Baureihen, Gerättypen oder Marken zu verwenden, beibehalten werden.

## Patentansprüche

1. Haushaltsgerät,
- wobei das Haushaltsgerät ein Haushaltsgroßgerät oder ein Haushaltskleingerät ist,
- ein erstes Elektronikmodul (101) und ein zweites Elektronikmodul (103) aufweist,
- mit einem Bus-System (102) ausgestattet ist, anhand dessen das erste Elektronikmodul (101) und das zweite Elektronikmodul (103) verbunden sind,
- wobei von dem ersten Elektronikmodul (101) eine zu übermittelnde Nachricht (A1) an das zweite Elektronikmodul (103) über das Bus-System (102) übertragbar ist,
**dadurch gekennzeichnet, dass** das Haushaltsgerät dazu eingerichtet ist,
- eine von dem ersten Elektronikmodul (101) zu übermittelnde Nachricht in Form eines Telegramms (A1) mittels einer vorgegebenen Information (207, K) und einer veränderlichen Zeitinformation zu verschlüsseln,
- die verschlüsselte Nachricht (A1) in Form eines Telegramms (X, Y) zu übertragen und
- das von dem zweiten Elektronikmodul (103) empfangene verschlüsselte Telegramm (X, Y) mittels der vorgegebenen Information (207, K) und der veränderlichen Zeitinformation zu entschlüsseln,
wobei
- die Elektronikmodule (101, 103) mindestens eine Benutzerschnittstelle, eine Messeinheit, eine Schalteinheit und/oder einen Aktuator umfassen, welche verschlüsselte Telegramme (X, Y) zum Nachrichtenaustausch nutzen.

2. Haushaltsgerät nach einem der vorhergehenden Ansprüche, bei dem die vorgegebene Information einen Schlüssel umfasst.

3. Haushaltsgerät nach einem der vorhergehenden Ansprüche, bei dem die vorgegebene Information ein Geheimnis umfasst betreffend eine Schlüsselinformation und das Geheimnis in dem ersten Elektronikmodul und in dem zweiten Elektronikmodul gespeichert ist.

4. Haushaltsgerät nach Anspruch 3, bei dem das Geheimnis eine Verteilung der Schlüsselinformation in der Nachricht ist.

5. Haushaltsgerät nach Anspruch 3, bei dem das Geheimnis die Positionen der verteilten Schlüsselinformation in der Nachricht ist.

6. Haushaltsgerät nach einem der vorhergehenden Ansprüche, bei dem das Haushaltsgerät dazu eingerichtet ist, die zu übermittelnde Nachricht von einem Sender zu verschlüsseln, zu einem Empfänger zu übertragen und von dem Empfänger zu entschlüsseln.

7. Haushaltsgerät nach einem der vorhergehenden Ansprüche, bei dem die veränderliche Zeitinformation einen Übermittlungszeitpunkt (t1) zur Übermittlung des zu verschlüsselnden Telegramms umfasst.

8. Haushaltsgerät nach einem der vorhergehenden Ansprüche, bei dem das Haushaltsgerät dazu eingerichtet ist, die Nachricht zusätzlich mittels einer veränderlichen Datumsinformation zu verschlüsseln.

9. Haushaltsgerät nach einem der vorhergehenden Ansprüche, bei dem das Haushaltsgerät dazu eingerichtet ist, die zu übermittelnde Nachricht zu verschlüsseln, indem ein Schlüssel in Teile zerlegt wird und die Teile des Schlüssels an unterschiedlichen Positionen der Nachricht eingefügt werden, wobei die vorgegebene Information angibt, an welchen Positionen der Nachricht welche Teile des Schlüssels eingefügt werden.

10. Haushaltsgerät nach einem der vorhergehenden Ansprüche, bei dem die Elektronikmodule, welche verschlüsselte Telegramme (X, Y) zum Nachrichtenaustausch nutzen, zusätzlich mindestens eines der folgenden Elektronikmodule umfasst:
- ein Steuer- oder Regelmodul,
- ein Zeitmodul,
- ein Bratenthermometer.

11. Haushaltsgerät nach einem der vorhergehenden Ansprüche, bei dem das Haushaltsgerät ein Haushaltsgroßgerät in Form eines Gargeräts, eines Wäschebehandlungsgeräts oder eines Kältegeräts ist.

12. Verfahren zur Übertragung von Nachrichten zwischen einem ersten Elektronikmodul (101) und einem zweiten Elektronikmodul (103) eines Haushaltsgeräts in Form eines Haushaltsgroßgeräts oder eines Haushaltskleingeräts, bei dem
- eine von dem ersten Elektronikmodul (101) zu übermittelnde Nachricht in Form eines Telegramms (A1) mittels einer vorgegebenen Information (207, K) und einer veränderlichen Zeitinformation verschlüsselt wird,
- die verschlüsselte Nachricht (A1) in Form eines Telegramms (X, Y) über ein Bus-System (102) an das zweite Elektronikmodul (103) übertragen wird und von dem zweiten Elektronikmodul (103) mittels der vorgegebenen Information (207, K) und der veränderlichen Zeitinformation (207) entschlüsselt wird,
wobei
- die Elektronikmodule (101, 103) mindestens eine Benutzerschnittstelle, eine Messeinheit, eine Schalteinheit und/oder einen Aktuator umfassen, welche verschlüsselte Telegramme (X, Y) zum Nachrichtenaustausch nutzen.

## Claims

1. Household appliance,
- wherein the household appliance is a large household appliance or a small household appliance,
- has a first electronics module (101) and a second electronics module (103),
- is equipped with a bus system (102), with the aid of which the first electronics module (101) and the second electronics module (103) are connected,
- wherein a message (A1) to be transferred can be transmitted from the first electronics module (101) to the second electronics module (103) by way of the bus system (102),
**characterised in that** the household appliance is designed
- to encrypt a message to be transferred from the first electronics module (101) in the form of a telegram (A1) by means of a predetermined item of information (207, K) and a variable item of time information,
- to transmit the encrypted message (A1) in the form of a telegram (X, Y) and
- to decrypt the encrypted telegram (X, Y) received by the second electronics module (103) by means of the predetermined item of information (207, K) and the variable item of time information,
wherein
- the electronics modules (101, 103) comprise at least a user interface, a measuring unit, a switching unit and/or an actuator, which use encrypted telegrams (X, Y) to exchange messages.

2. Household appliance according to one of the preceding claims, in which the predetermined item of information comprises a key.

3. Household appliance according to one of the preceding claims, in which the predetermined item of information comprises a secret relating to an item of key information and the secret is stored in the first electronics module and in the second electronics module.

4. Household appliance according to claim 3, in which the secret is a distribution of the key information in the message.

5. Household appliance according to claim 3, in which the secret is the positions of the distributed key information in the message.

6. Household appliance according to one of the preceding claims, in which the household appliance is designed to encrypt the message to be transferred by a sender, to transmit the message to a receiver and to decrypt the message by the receiver.

7. Household appliance according to one of the preceding claims, in which the variable item of time information comprises a transfer time point (t1) for the transfer of the telegram to be encrypted.

8. Household appliance according to one of the preceding claims, in which the household appliance is designed to encrypt the message additionally by means of a variable item of date information.

9. Household appliance according to one of the preceding claims, in which the household appliance is designed to encrypt the message to be transferred, by a key being broken down into parts and the parts of the key being inserted at different positions in the message, wherein the predetermined item of information specifies which parts of the key are inserted at which positions in the message.

10. Household appliance according to one of the preceding claims, in which the electronics modules, which use encrypted telegrams (X, Y) to exchange messages, additionally comprise at least one of the following electronics modules:
- an open-loop or closed-loop control module,
- a time module,
- a roasting thermometer.

11. Household appliance according to one of the preceding claims, in which the household appliance is a large household appliance in the form of a cooking appliance, a laundry treatment appliance or a refrigeration appliance.

12. Method for transmitting messages between a first electronics module (101) and a second electronics module (103) of a household appliance in the form of a large household appliance or a small household appliance, in which
- a message to be transferred by the first electronics module (101) in the form of a telegram (A1) is encrypted by means of a predetermined item of information (207, K) and a variable item of time information,
- the encrypted message (A1) is transmitted in the form of a telegram (X, Y) via a bus system (102) to the second electronics module (103) and decrypted by the second electronics module (103) by means of the predetermined item of information (207, K) and the variable item of time information (207),
wherein
- the electronics modules (101, 103) comprise at least a user interface, a measuring unit, a switching unit and/or an actuator, which use encrypted telegrams (X, Y) to exchange messages.

## Revendications

1. Appareil ménager,
- dans lequel l'appareil ménager est un gros appareil ménager ou un petit appareil ménager,
- présente un premier module électronique (101) et un deuxième module électronique (103),
- est équipé d'un système de bus (102) à l'aide duquel le premier module électronique (101) et le deuxième module électronique (103) sont reliés,
- dans lequel un message (A1) à transmettre au deuxième module électronique (103) par le premier module électronique (101) est transmissible par l'intermédiaire du système de bus (102),
**caractérisé en ce que** l'appareil ménager est configuré
- pour coder un message à transmettre par le premier module électronique (101) sous forme d'un télégramme (A1) au moyen d'une information prédéfinie (207, K) et d'une information de temps modifiable,
- pour transmettre le message codé (A1) sous forme d'un télégramme (X, Y), et
- pour décoder le télégramme codé (X, Y), reçu par le deuxième module électronique (103), au moyen de l'information prédéfinie (207, K) et de l'information de temps modifiable,
dans lequel
- les modules électroniques (101, 103) comprennent au moins une interface utilisateur, une unité de mesure, une unité de commutation et/ou un actionneur, lesquels utilisent des télégrammes codés (X, Y) pour l'échange de messages.

2. Appareil ménager selon l'une quelconque des revendications précédentes, dans lequel l'information prédéfinie comprend un code.

3. Appareil ménager selon l'une quelconque des revendications précédentes, dans lequel l'information prédéfinie comprend un secret concernant une information de code, et dans lequel le secret est mémorisé dans le premier module électronique et dans le deuxième module électronique.

4. Appareil ménager selon la revendication 3, dans lequel le secret est une répartition de l'information de code dans le message.

5. Appareil ménager selon la revendication 3, dans lequel le secret est les positions dans le message de l'information de code répartie.

6. Appareil ménager selon l'une quelconque des revendications précédentes, dans lequel l'appareil ménager est configuré pour coder par un émetteur le message à transmettre, pour le transmettre à un récepteur et pour le décoder par le récepteur.

7. Appareil ménager selon l'une quelconque des revendications précédentes, dans lequel l'information de temps modifiable comprend un moment de transmission (t1) pour la transmission du télégramme à coder.

8. Appareil ménager selon l'une quelconque des revendications précédentes, dans lequel l'appareil ménager est configuré pour coder le message en outre au moyen d'une information de date modifiable.

9. Appareil ménager selon l'une quelconque des revendications précédentes, dans lequel l'appareil ménager est configuré pour coder le message à transmettre du fait qu'un code est décomposé en parties et que les parties du code sont insérées au message à différentes positions, l'information prédéfinie indiquant quelles parties du code sont insérées à quelles positions du message.

10. Appareil ménager selon l'une quelconque des revendications précédentes, dans lequel les modules électroniques, lesquels utilisent des télégrammes codés (X, Y) pour l'échange de messages, comprennent en outre au moins un des modules électroniques suivants :
- un module de commande ou de régulation,
- un module de temps
- un thermomètre de cuisson.

11. Appareil ménager selon l'une quelconque des revendications précédentes, dans lequel l'appareil ménager est un gros appareil ménager sous forme d'un appareil de cuisson, d'un appareil de traitement de linge ou un appareil frigorifique.

12. Procédé de transmission de messages entre un premier module électronique (101) et un deuxième module électronique (103) d'un appareil ménager sous forme d'un gros appareil ménager ou d'un petit appareil ménager, dans lequel
- un message à transmettre par le premier module électronique (101) est codé sous forme d'un télégramme (A1) au moyen d'une information prédéfinie (207, K) et d'une information de temps modifiable,
- le message codé (A1) sous forme d'un télégramme (X, Y) est transmis au deuxième module électronique (103) par l'intermédiaire d'un système de bus (102) et est décodé par le deuxième module électronique (103) au moyen de l'information prédéfinie (207, K) et de l'information de temps (207) modifiable,
dans lequel
- les modules électroniques (101, 103) comprennent au moins une interface utilisateur, une unité de mesure, une unité de commutation et/ou un actionneur, lesquels utilisent des télégrammes codés (X, Y) pour l'échange de messages.
